# EUROPÄISCHE PATENTSCHRIFT

(11) **EP 2 689 243 B1**
(45) Veröffentlichungstag und Bekanntmachung des Hinweises auf die Patenterteilung: **24.06.2015**
(21) Anmeldenummer: 12726365.5
(22) Anmeldetag: 11.05.2012
(51) Int. Cl.: G01N 29/26

(54) **VORRICHTUNG UND VERFAHREN ZUR ULTRASCHALLPRÜFUNG EINES WERKSTÜCKS**
DEVICE AND METHOD FOR ULTRASOUND TESTING A WORKPIECE
DISPOSITIF ET PROCÉDÉ DESTINÉS AU CONTRÔLE PAR ULTRASONS D'UNE PIÈCE USINÉE

(30) Priorität: 24.05.2011 EP 11167291
(43) Veröffentlichungstag der Anmeldung: 29.01.2014
(73) Patentinhaber: Siemens Aktiengesellschaft, 80333 München (DE)
(72) Erfinder: BÜCHNER, Uwe, 10247 Berlin (DE); HEINRICH, Werner, 16727 Oberkrämer OT Bärenklau (DE); KOLK, Karsten, 45479 Mülheim a.d. Ruhr (DE); LOHMANN, Hans-Peter, 46485 Wesel-Obrighoven (DE)
(86) Internationale Anmeldenummer: PCT/EP2012/058723
(87) Internationale Veröffentlichungsnummer: WO 2012/159899

(56) Entgegenhaltungen:
- EP-A1- 1 693 668
- DE-A1- 2 027 817
- DE-A1- 3 241 200
- US-A1- 2004 050 166
- US-B1- 6 792 808

## Beschreibung

Die Erfindung betrifft eine Vorrichtung und ein Verfahren zur Ultraschallprüfung eines Werkstücks.

Im Rahmen zahlreicher technischer Anwendungen werden Werkstücke einer Ultraschallprüfung unterzogen, um die Qualität der Werkstücke oder deren Verschleiß oder deren betrieblichen Beanspruchungen zu beurteilen. Zur Ultraschallprüfung werden Prüfköpfe vorgesehen, mit denen Ultraschall in das Werkstück einkoppelbar und von aus dem Werkstück austretender Ultraschall detektierbar ist. Hierbei werden ein oder zwei Prüfköpfe im Bereich einer erwarteten Fehlstelle an der Oberfläche des Werkstücks angelegt sowie zueinander und relativ zum Werkstück in Position gebracht, dass von dem einen Prüfkopf emittierter Ultraschall an der Fehlstelle reflektiert wird und der reflektierte Ultraschall auf den anderen Prüfkopf trifft und somit detektiert wird. Die sich dabei ergebenden Positionen der Prüfköpfe lassen zusammen mit dem detektierten Ultraschallsignal Rückschlüsse auf die Lage, die Orientierung und die Größe der Fehlstelle im Inneren des Werkstücks zu.

Fehlstellen mit einer senkrecht zur Oberfläche des Werkstücks verlaufenden Orientierung sind vorzugsweise mit der Tandemtechnik detektierbar. Dabei weisen die beiden Prüfkopfe einen Vorsatzkeil auf, mit dem Transversalwellen unter bestimmten Einschallwinkeln in das Werkstück emittiert werden. In der Regel wird als der Einschallwinkel 45° gewählt, es sind jedoch Techniken bekannt, bei denen andere Einschallwinkel gewählt werden. Der Prüfkopf ist herkömmlich als ein Einzelschwinger ausgebildet, wobei die Prüfköpfe bei der Ultraschallprüfung manuell entlang der Oberfläche des Werkstücks verschoben werden, bis eine Fehlstelle detektiert ist.

Die Prüfköpfe sind beispielsweise an ein und derselben Oberfläche des Werkstücks angeordnet und werden so in Position gebracht, dass das von dem einen Prüfkopf emittierte Ultraschallbündel an einer Fehlstelle im Werkstück reflektiert wird. Das reflektierte Ultraschallbündel trifft sodann auf diejenige Oberfläche des Werkstücks, die der Oberfläche mit den Prüfköpfen gegenüberliegend angeordnet ist, und wird dort ebenfalls reflektiert. Sind die beiden Oberflächen parallel zueinander angeordnet und ist die Erstreckung der Fehlstelle im Wesentlichen senkrecht zu den Oberflächen, so wird das Ultraschallbündel etwa um 180° umgelenkt und trifft auf den zweiten Prüfkopf, wenn dieser sich in der entsprechenden Position auf der einen Oberfläche befindet. Dieses Vorgehen ist als Tandemtechnik bekannt. Alternativ kann der zweite Prüfkopf an der zweiten Oberfläche angeordnet werden. Dadurch halbiert sich der Schallweg des Ultraschallbündels durch das Werkstück, da das Ultraschallbündel nur einmal an der Fehlstelle reflektiert wird. Dieses Vorgehen ist als Pitch-Catch-Technik bekannt. Sowohl bei der Tandemtechnik als auch bei der Pitch-Catch-Technik ergibt sich die Prüfzone in dem Werkstück durch den Abstand der beiden Prüfköpfe zueinander.

Aus der US 2004/0050166 A1 ist eine Anordnung zur ultraschallgestützten Detektion mit einer Vielzahl von Schwingerelementen bekannt. Die einzelnen Schwingerelemente können zeitversetzt angesteuert werden.

Die US 6,792,808 B1 zeigt Anordnungen zur ultraschallgestützten Detektion mit einer Vielzahl von Schwingerelementen. Dabei können die einzelnen Schwingerelemente als Sender oder als Empfänger eingesetzt werden. Die Schwingerelemente sind gruppenweise ansteuerbar.

Aus der DE 32 41 200 A1 ist eine Ultraschallwandleranordnung mit einem Array aus Wandlerelementen bekannt. Den Wandlerelementen ist ein Sendesystem und ein Empfangssystem mit elektronischer Schwenkung und Fokussierung des Schallfelds durch Verzögerung der Sende- und Empfangssignale zugeordnet.

Aus der EP 1 693 668 A1 ist eine Messeinrichtung zum Messen von Defekten an einem Bauelement einer Turbine bekannt. Die Messeinrichtung weist einen Gruppenstrahlerprüfkopf zum Senden und Empfangen von Ultraschall auf. Durch eine Steuereinrichtung können einzelne Bereiche des Gruppenstrahlerprüfkopfs angesteuert werden.

Aus der DE 20 27 817 A1 ist ein Ultraschallprüfgerät zur Rissfeststellung bei hohen Temperaturen bekannt. Dazu ist ein über das zu prüfende Material gleitender Schuh vorgesehen, der ein Sägezahnprofil aufweist. Das Sägezahnprofil ermöglicht, dass zwischen Schuh und zu prüfendem Material befindliches Wasser besser verwirbelt werden kann. Damit soll die Kühlung verbessert werden.

Aufgabe der Erfindung ist es eine Vorrichtung zur Ultraschallprüfung eines Werkstücks sowie ein Verfahren zur Ultraschallprüfung des Werkstücks zu schaffen, wobei die Ultraschallprüfung einfach handhabbar bei einer hohen Prüfgenauigkeit ist.

Die erfindungsgemäße Vorrichtung zur Ultraschallprüfung eines Werkstücks weist mindestens einen langgestreckten Linearprüfkopf und ein Steuergerät zum Ansteuern des Linearprüfkopfs auf, der eine Mehrzahl an Schwingerelementen aufweist, die in Reihe entlang der Längsrichtung des Linearprüfkopfs angeordnet sind und einzeln und/oder gruppenweise von dem Steuergerät unter einer Emission oder zu einer Detektion von Ultraschall aktivierbar sind und dadurch mindestens eine Aktivzone des Linearprüfkopfs bilden, wobei mittels der Ansteuerung der einzelnen Schwingerelemente durch das Steuergerät die mindestens eine Aktivzone entlang der Längsrichtung des Linearprüfkopfs bewegbar ist.

Der Linearprüfkopf weist ein Vorlaufsägezahnprofil auf, dessen Sägezähne als Vorlaufkeile der Schwingerelemente vorgesehen sind. Hierbei ist es bevorzugt, dass die Sägezähne asymmetrische Flanken aufweisen, wobei der Steigungswinkel der flacheren der Flanken bevorzugt einen Einschallwinkel bestimmt. Ferner erzeugen die Schwingerelemente bevorzugt einen Einschallwinkel von 45°. Der Linearprüfkopf weist bevorzugt mehr als 100 Schwingerelemente auf, wobei die Aktivzone von 10 bis 20 Schwingerelementen gebildet ist.

Das erfindungsgemäße Verfahren zur Ultraschallprüfung eines Werkstücks weist die Schritte auf: Bereitstellen von mindestens einem der Linearprüfköpfe; hintereinander Anlegen der Linearprüfköpfe an die Oberfläche des Werkstücks; Ansteuern des ersten Linearprüfkopfs mit dem Steuergerät zum Ausbilden der Aktivzone zur Ultraschallemission in das Werkstück; Ansteuern des zweiten Linearprüfkopfs mit dem Steuergerät zum Ausbilden der Aktivzone zur Detektion von Ultraschall, der von der Aktivzone des ersten Linearprüfkopfs emittiert wurde und aus dem Werkstück austritt; Verschieben der Aktivzone der beiden Linearprüfköpfe derart, bis von dem zweiten Linearprüfkopf Ultraschall detektiert wird; Ermitteln der Lage einer Fehlstelle in dem Werkstück in Abhängigkeit des Abstands der Aktivzonen voneinander bei der Detektion und der Lage der Aktivzonen relativ zum Werkstück.

Alternativ weist das Verfahren die Schritte auf: Bereitstellen von zwei der Linearprüfköpfen; Anlegen der Prüfköpfe an zwei einander gegenüberliegenden Oberflächen des Werkstücks, wobei die Linearprüfköpfe im Wesentlichen auf gleicher Höhe angeordnet sind; Ansteuern des ersten Linearprüfkopfs mit dem Steuergerät zum Ausbilden der Aktivzone zur Ultraschallemission in das Werkstück; Ansteuern des zweiten Linearprüfkopfs mit dem Steuergerät zum Ausbilden der Aktivzone zur Detektion von Ultraschall der von der Aktivzone des ersten Linearprüfkopfs emittiert wurde und aus dem Werkstück austritt; Verschieben der Aktivzonen der beiden Linearprüfköpfe derart, bis von dem zweiten Linearprüfkopf Ultraschall detektiert wird; Ermitteln der Lage einer Fehlstelle in dem Werkstück in Abhängigkeit des Abstands der Aktivzonen voneinander bei der Detektion und der Lage der Aktivzonen relativ zum Werkstück.

Bevorzugt ist es, dass beim Ermitteln der Lage der Fehlstelle der Einschallwinkel der Schwingerelemente variiert wird. Dabei wird der Einschallwinkel der Schwingerelemente bevorzugt so variiert, dass die Ultraschallfelder im Werkstück fokussiert werden.

Bei der Suche nach der Lage der Fehlstelle werden die Linearprüfköpfe mit dem Steuergerät derart angesteuert, dass die Aktivzonen in den Linearprüfköpfen verlagert werden. Entsprechend der Positionen der Linearprüfköpfe findet eine entsprechende Einschallung in das Werkstück und eine entsprechende Detektion des aus dem Werkstück austretenden Unterschalls statt. Bei der Ansteuerung der Linearprüfköpfe sind diese fest an die Oberfläche des Werkstücks angelegt, wobei etwa ein mechanisches Verschieben der Linearprüfköpfe entlang der an sie anliegenden Oberfläche nicht notwendig ist. Dadurch kann vorteilhaft die Lage der Fehlstelle durch eine entsprechende elektronische Ansteuerung der Linearprüfköpfe durch das Steuergerät schnell und präzise durchgeführt werden. Außerdem brauchen bei der Ultraschallprüfung des Werkstücks die Linearprüfköpfe lediglich auf die Oberfläche des Werkstücks angelegt zu werden, wobei aufwändige Vorkehrungen für die mechanische Verschiebbarkeit der Linearprüfköpfe nicht gesorgt zu werden braucht. Dadurch ist vorteilhaft die Einrichtzeit und die Prüfzeit bei der Durchführung der Ultraschallprüfung reduziert.

Außerdem kann vorteilhaft von der Pitch-Catch-Technik Anwendung gemacht werden, bei der durch eine Verkürzung des Schallwegs durch das Werkstück vorteilhaft ist. Somit ist bei der Anwendung der Pitch-Catch-Technik das Ultraschallnachweisvermögen hoch.

Durch das Vorsehen des Vorlaufsägezahnprofils der Linearprüfköpfe können diese schmal und schlank gebaut sein. Dadurch sind etwaige Störungen durch Mehrfachreflexionen, wie sie etwa in großen Vorlaufkeilen bei Prüfköpfen mit einer hohen Bauhöhe auftreten, unterbunden. Außerdem ist hervorgerufen durch das Vorsehen des Vorlaufsägezahnprofils das Dämpfungsvermögen des Linearprüfkopfs gering, wodurch das Ultraschallnachweisvermögen der erfindungsgemäßen Vorrichtung hoch ist. Insbesondere ist das Verfahren zur Ultraschallprüfung geeignet, bei der Prüfung von Engspaltschweißungen bei Werkstücken mit großen Wandstärken und bei großen Schmiedeteilen.

Mit dem Linearprüfkopf und seinem Vorlaufsägezahnprofil ist vorteilhaft für jedes Schwingerelement eines der Sägezähne als ein Vorlaufkeil vorgesehen. Somit sind die Schallwege der von den Schwingerelementen emittierten Ultraschallbündel gleich, wodurch das Signal/Rauschverhältnis.des Linearprüfkopfs hoch ist. Außerdem ist der Linearprüfkopf vorteilhaft als ein Gruppenstrahler ausgebildet, wodurch eine Variation des Einschallwinkels und eine Fokussierung der Schallfelder in dem Werkstück ermöglicht ist und somit eine Verbesserung des Fehlerauffindvermögens erzielt ist. Beim Verwenden von zwei Linearprüfköpfen in Pitch-Catch-Technik können die beiden Linearprüfköpfe unter Nutzung ihres direkten Ultraschalls zueinander ausgerichtet werden, da sie einander direkt gegenüberliegend angeordnet sind. Durch die vorteilhaft erreichte elektronische Einstellung der Tiefenzone der erfindungsgemäßen Vorrichtung ist kein mechanisches Verschieben etwa der Linearprüfköpfe auf der Oberfläche des Werkstücks notwendig. Dadurch ist der mechanische Aufbau der erfindungsgemäßen Vorrichtung einfach. Außerdem ist durch die Möglichkeit der Fokussierung der Ultraschallfelder im Werkstück eine hohe Fehlererkennung erreicht. Mit der möglichen Variation des Einschallwinkels ist vorteilhaft flexibel die Tiefenzone einer zu ermittelnden Fehlstelle auffindbar.

Im Folgenden werden bevorzugte Ausführungsformen der erfindungsgemäßen Vorrichtung zur Ultraschallprüfung eines Werkstücks anhand der beigefügten schematischen Zeichnungen erläutert. Es zeigt:
- Figur 1: eine schematische Querschnittsdarstellung eines Werkstücks, das in Tandemtechnik geprüft wird;
- Figur 2: eine schematische Querschnittsdarstellung eines Werkstücks, das in Pitch-Catch-Technik geprüft wird; und
- Figur 3: einen Längsschnitt durch einen Linearprüfkopf.

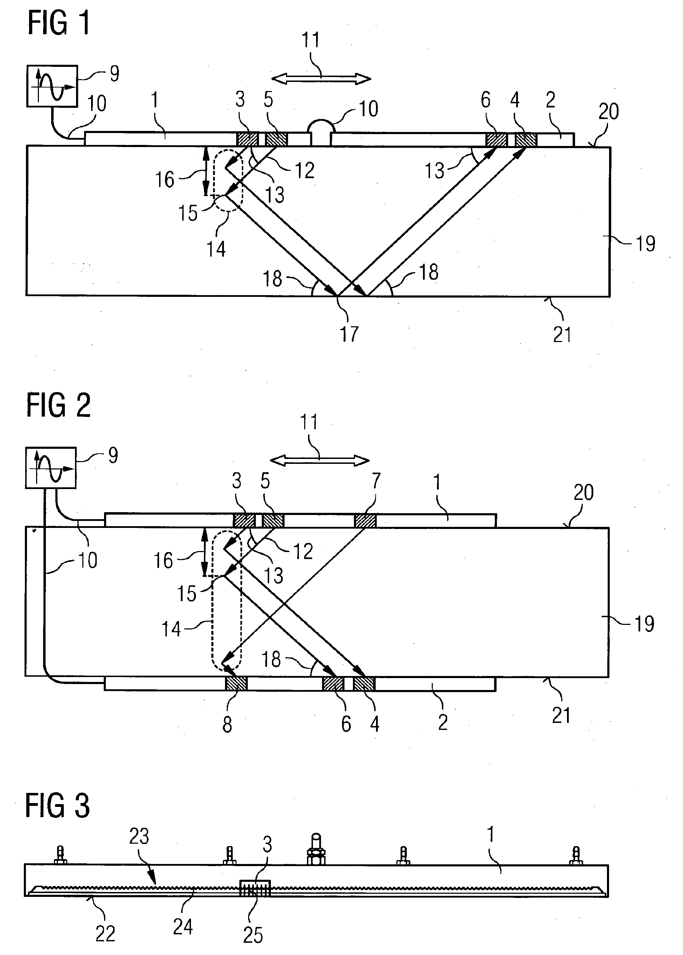

Wie es aus Fig. 1 bis 3 ersichtlich ist, weisen jeweils Linearprüfköpfe 1, 2 an ihrer Unterseite eine Anlagefläche 22 auf, an der ein Vorlaufsägezahnprofil 23 angeordnet ist. Das Vorlaufsägezahnprofil 23 ist von einer Mehrzahl an nebeneinanderliegenden Sägezähnen 24 gebildet, die jeweils einem Schwingerelement 25 zugeordnet sind, so dass für jedes der Schwingerelemente 25 einer der Sägezähne 24 einen Vorlaufkeil bildet.

Die Linearprüfköpfe 1, 2 sind derart ausgebildet, dass in das Werkstück 19 Ultraschall-Longitudinalwellen und/oder Ultraschall-Transversalwellen eingeschallt werden können. Der Anteil der Ultraschall-Longitudinalwellen und/oder der Ultraschall-Transversalwellen ist bestimmt von dem Winkel der Vorlaufkeile.

Die Vorrichtung zur Ultraschallprüfung weist den ersten Linearprüfkopf 1, den zweiten Linearprüfkopf 2 und ein Steuergerät 9 auf. Das Steuergerät 9 ist via eine Steuerleitung 10 sowohl mit dem ersten Linearprüfkopf 1 als auch mit dem zweiten Linearprüfkopf 2 gekoppelt, wodurch die einzelnen Schwingerelemente 25 der Linearprüfköpfe 1, 2 individuell ansteuerbar sind. Das Steuergerät 9 ist eingerichtet die Schwingerelemente 25 derart anzusteuern, dass im ersten Linearprüfkopf 1 eine Strahlergruppe 3, 5, 7 und im zweiten Linearprüfkopf 2 eine Sensorgruppe 4, 6, 8 jeweils als Aktivzonen gebildet werden können.

Die Linearprüfköpfe 1, 2 sind langgestreckt ausgebildet, wobei ihre Längsrichtung in den Fig. 1 und 2 mit einem Pfeil dargestellt ist, der mit dem Bezugszeichen 11 bezeichnet ist. Von dem Steuergerät 9 sind die Linearprüfköpfe 1, 2 so ansteuerbar, dass sowohl die Strahlergruppe 3 in die Positionen der Strahlergruppen 5 und 7 als auch die Sensorgruppe 4 in die Positionen der Sensorgruppen 6 und 9 entlang der Längsrichtung 11 verlagerbar sind.

Gemäß Fig. 1 wird ein Werkstück 19 mit den Linearprüfköpfen 1 und 2 in Tandemtechnik geprüft. Das heißt, dass die Linearprüfköpfe 1, 2 auf einer ersten Werkstückoberfläche 20 in ihrer Längsrichtung 11 fluchtend hintereinanderliegend angeordnet sind. Von dem Steuergerät 9 ist der erste Linearprüfkopf 1 so angesteuert, das die erste Strahlergruppe 3 aktiviert ist. Von der ersten Strahlergruppe 3 wird ein Ultraschallbündel 12 unter einem Einschallwinkel 13 von 45° in Richtung zu einem Fehlererwartungsbereich 14 in das Werkstück 19 gesendet. Die Position der ersten Strahlergruppe 3 ist derart, dass das Ultraschallbündel 12 auf eine Fehlerstelle 15 trifft, die im Fehlerwartungsbereich 14 angesiedelt ist. Die Fehlerstelle 15 weist tendenziell eine Erstreckungsrichtung auf, die senkrecht zur Längsrichtung 11 verläuft. Der Einschallwinkel 13 ist bestimmt von dem Winkel der Vorlaufkeile und den Schallgeschwindigkeiten an den Grenzflächen zwischen den Schwingerelementen 25 und dem Werkstück 19.

An der Fehlerstelle 15 wird das Ultraschallbündel 12 reflektiert und trifft schließlich auf eine der ersten Werkstückoberfläche 20 abgewandt angeordneten, zweiten Werkstückoberfläche 21. Die beiden Werkstückoberflächen 20, 21 sind parallel zueinander angeordnet. Das Ultraschallbündel 12 wird an einer Oberflächenreflexionsstelle 17 unter einen Oberflächenreflexionswinkel 18 an der zweiten Werkstückoberfläche 21 reflektiert und trifft schließlich auf die erste Sensorgruppe 4 des zweiten Linearprüfkopfs 2. Der relative Abstand der ersten Strahlergruppe 3 zur ersten Sensorgruppe 4 ist derart eingestellt, dass die Fehlerstelle 15 in ihrer Fehlerstellentiefe 16 von dem Ultraschallbündel 12 getroffen wird.

Liegt die Fehlerstelle 15 in einer anderen Fehlerstellentiefe 16, so ist zum Detektieren der Fehlerstelle 15 die zweite Strahlergruppe 5 des ersten Linearprüfkopfs 1 und die zweite Sensorgruppe 6 des zweiten Linearprüfkopfs 2 zu aktivieren. Die Position der zweiten Strahlergruppe 5 und der zweiten Sensorgruppe 6 ist derart gewählt, dass die Fehlerstelle 15 in ihrer Fehlerstellentiefe 16 von dem Ultraschallbündel 12 getroffen wird.

Die Linearprüfköpfe 1, 2 sind derart ausgebildet, dass in dem ersten Linearprüfkopf 1 sowohl Strahlergruppen als auch Sensorgruppen von dem Steuergerät 9 aktivierbar sind. Dadurch kann bei der Ausführungsform gemäß Fig. 1 der zweite Linearprüfkopf 2 weggelassen werden, wenn in dem ersten Linearprüfkopf 1 analog sowohl die Strahlergruppen 3, 5 als auch die Sensorgruppen 4, 6 von dem Steuergerät 9 aktiviert werden.

In Fig. 2 wird das Werkstück mit den Linearprüfköpfen 1, 2 in Pitch-Catch-Technik geprüft. Im Gegensatz zu Fig. 1 ist der zweite Linearprüfkopf 2 nicht auf der ersten Werkstückoberfläche 20, sondern auf der zweiten Werkstückoberfläche 21 dem ersten Linearprüfkopf 1 gegenüberliegend angeordnet. Dadurch ist die Reflexion des Ultraschallbündels 12 an der Oberflächenreflexionsstelle 17 nicht von Bedeutung, so dass der relevante Schallweg des Ultraschallbündels 12 in dem Werkstück 19 im Wesentlichen sich halbiert.

Mit dem Steuergerät 9 sind die erste Strahlergruppe 3 und die erste Sensorgruppe 4 sowie die zweite Strahlergruppe 5 und die zweite Sensorgruppe 6 jeweils aktivierbar, um entsprechend die Fehlerstelle 15 aufzufinden. Befindet sich beispielsweise die Fehlerstelle in der Nähe der zweiten Werkstückoberfläche 21, so ist die dritte Strahlergruppe 7 zusammen mit der dritten Sensorgruppe 8 zu aktivieren.

Gemäß Fig. 2 sind die Fehlerstellen 15 in dem Fehlererwartungsbereich 14 über verschiedene Fehlerstellentiefen 16 verteilt angeordnet. Um den Fehlererwartungsbereich 14 abzusuchen, sind von dem Steuergerät 9 die einzelnen Schwingerelemente 25 der Linearprüfköpfe 1 und 2 so anzusteuern, dass die erste Strahlergruppe 3 zusammen mit der ersten Sensorgruppe 4 aktiv ist, wodurch die Fehlerstelle 15 in der Nähe der ersten Werkstückoberfläche 20 detektiert wird. Die Strahlergruppe und die Sensorgruppe wird sodann zur Position der zweiten Strahlergruppe 4 und der zweiten Sensorgruppe 6 verlagert, wodurch die Fehlerstelle 15 im Mittelbereich des Werkstücks 19 innerhalb des Fehlererwartungsbereichs 14 detektiert wird. Danach wird die Aktivität der Strahlergruppe in die Position der dritten Strahlergruppe 7 und die Aktivität der Sensorgruppe in die Position der dritten Sensorgruppe 8 verlegt, wodurch die Fehlerstelle 15 in der Nähe der zweiten Werkstückoberfläche 21 im Fehlererwartungsbereich 14 detektiert wird.

## Patentansprüche

1. Vorrichtung zur Ultraschallprüfung eines Werkstücks (19),
mit mindestens einem langgestreckten Linearprüfkopf (1, 2) und einem Steuergerät (9) zum Ansteuern des Linearprüfkopfs (1, 2), der eine Mehrzahl an Schwingerelementen (25) aufweist, die in Reihe entlang der Längsrichtung (11) des Linearprüfkopfs (1, 2) angeordnet sind und einzeln und/oder gruppenweise von dem Steuergerät (9) unter einer Emission oder zu einer Detektion von Ultraschall aktivierbar sind und dadurch mindestens eine Aktivzone des Linearprüfkopfs (1, 2) bilden,
wobei mittels der Ansteuerung der einzelnen Schwingerelemente (25) durch das Steuergerät (9) die mindestens eine Aktivzone entlang der Längsrichtung (11) des Linearprüfkopfs (1, 2) bewegbar ist,
**dadurch gekennzeichnet, dass**
der Linearprüfkopf (1, 2) ein Vorlaufsägezahnprofil (23) aufweist, dessen Sägezähne (24) als Vorlaufkeile der Schwingerelemente (25) vorgesehen sind.

2. Vorrichtung gemäß Anspruch 1,
wobei die Sägezähne (24) asymmetrische Flanken aufweisen.

3. Vorrichtung gemäß Anspruch 2,
wobei der Steigungswinkel der flacheren der Flanken einen Einschallwinkel (13) bestimmt.

4. Vorrichtung gemäß einem der Ansprüche 1 bis 3,
wobei die Schwingerelemente (25) einen Einschallwinkel (13) von 45° erzeugen.

5. Vorrichtung gemäß einem der Ansprüche 1 bis 4,
wobei der Linearprüfkopf (1, 2) mehr als 100 Schwingerelemente (25) aufweist, wobei die Aktivzone von 10 bis 20 Schwingerelementen (25) gebildet ist.

6. Verfahren zur Ultraschallprüfung eines Werkstücks (19), mit den Schritten:
- Bereitstellen von mindestens einem der Linearprüfköpfe (1, 2) gemäß einem der Ansprüche 1 bis 5;
- hintereinander Anlegen der Linearprüfköpfe (1, 2) an die Oberfläche (20) des Werkstücks (19);
- Ansteuern des ersten Linearprüfkopfs (1) mit dem Steuergerät (9) zum Ausbilden der Aktivzone (3, 5, 7) zur Ultraschallemission in das Werkstück (9);
- Ansteuern des zweiten Linearprüfkopfs (2) mit dem Steuergerät (9) zum Ausbilden der Aktivzone (4, 6, 8) zur Detektion von Ultraschall, der von der Aktivzone (3, 5, 7) des ersten Linearprüfkopfs (1) emittiert wurde und aus dem Werkstück (19) austritt;
- Verlagern der Aktivzonen der beiden Linearprüfköpfe (1, 2) derart, bis von dem zweiten Linearprüfkopf (2) Ultraschall detektiert wird;
- Ermitteln der Lage (16) einer Fehlstelle (15) in dem Werkstück (19) in Abhängigkeit des Abstands der Aktivzonen voneinander bei der Detektion und der Lage der Aktivzonen relativ zum Werkstück (19).

7. Verfahren zur Ultraschallprüfung eines Werkstücks (19), mit den Schritten:
- Bereitstellen von zwei Linearprüfköpfen (1, 2) gemäß einem der Ansprüche 1 bis 5;
- Anlegen der Linearprüfköpfe (1, 2) an zwei einander gegenüberliegenden Oberflächen (20, 21) des Werkstücks (19), wobei die Linearprüfköpfe (1, 2) im Wesentlichen auf gleicher Höhe angeordnet sind;
- Ansteuern des ersten Linearprüfkopfs (1) mit dem Steuergerät (9) zum Ausbilden der Aktivzone (3, 5, 7) zur Ultraschallemission in das Werkstück (9);
- Ansteuern des zweiten Linearprüfkopfs (2) mit dem Steuergerät (9) zum Ausbilden der Aktivzone (4, 6, 8) zur Detektion von Ultraschall, der von der Aktivzone (3, 5, 7) des ersten Linearprüfkopfs (1) emittiert wurde und aus dem Werkstück (19) austritt;
- Verlagern der Aktivzonen der beiden Linearprüfköpfe (1, 2) derart, bis von dem zweiten Linearprüfkopf (2) Ultraschall detektiert wird;
- Ermitteln der Lage (16) einer Fehlstelle (15) in dem Werkstück (19) in Abhängigkeit des Abstands der Aktivzonen voneinander bei der Detektion und der Lage der Aktivzonen relativ zum Werkstück (19).

8. Verfahren gemäß Anspruch 6 oder 7,
wobei der Einschallwinkel (13) der Schwingerelemente (25) variiert wird.

9. Verfahren gemäß einem der Ansprüche 6 bis 8,
wobei der Einschallwinkel (13) der Schwingerelemente (25) so variiert wird, dass Ultraschallfelder im Werkstück (19) fokussiert werden.

## Claims

1. Device for the ultrasonic testing of a workpiece (19), with at least one elongate linear probe (1, 2) and a control unit (9) for actuating the linear probe (1, 2), which unit has a plurality of oscillator elements (25) that are arranged in a row along the longitudinal direction (11) of the linear probe (1, 2) and can be activated individually and/or in groups by the control unit (9) while emitting ultrasound or for detecting ultrasound and, as a result, form at least one active zone of the linear probe (1, 2),
wherein the at least one active zone can be moved along the longitudinal direction (11) of the linear probe (1, 2) by means of activation of the individual oscillator elements (25) by the control unit (9),
**characterized in that**
the linear probe (1, 2) has a leading sawtooth profile (23), the saw teeth (24) of which are provided as lead wedges of the oscillator elements (25).

2. Device according to Claim 1,
wherein the saw teeth (24) have asymmetric flanks.

3. Device according to Claim 2,
wherein the angle of pitch of the flatter of the flanks determines an acoustic irradiation angle (13).

4. Device according to one of Claims 1 to 3,
wherein the oscillator elements (25) form an acoustic irradiation angle (13) of 45°.

5. Device according to one of Claims 1 to 4,
wherein the linear probe (1, 2) has more than 100 oscillator elements (25), wherein the active zone is formed by 10 to 20 oscillator elements (25).

6. Method for the ultrasonic testing of a workpiece (19), with the steps of:
- providing at least one of the linear probes (1, 2) according to one of Claims 1 to 5;
- placing the linear probes (1, 2) one after the other onto the surface (20) of the workpiece (19);
- activating the first linear probe (1) with the control unit (9) to form the active zone (3, 5, 7) for the emission of ultrasound into the workpiece (9);
- activating the second linear probe (2) with the control device (9) to form the active zone (4, 6, 8) for the detection of ultrasound that has been emitted from the active zone (3, 5, 7) of the first linear probe (1) and emerges from the workpiece (19);
- displacing the active zones of the two linear probes (1, 2) until ultrasound is detected by the second linear probe (2);
- determining the position (16) of a defect (15) in the workpiece (19) in dependence on the distance of the active zones from one another during the detection and the position of the active zones in relation to the workpiece (19).

7. Method for the ultrasonic testing of a workpiece (19), with the steps of:
- providing two linear probes (1, 2) according to one of Claims 1 to 5;
- placing the linear probes (1, 2) onto two surfaces (20, 21) of the workpiece (19) lying opposite one another, wherein the linear probes (1, 2) are arranged substantially at the same height;
- activating the first linear probe (1) with the control unit (9) to form the active zone (3, 5, 7) for the emission of ultrasound into the workpiece (9);
- activating the second linear probe (2) with the control device (9) to form the active zone (4, 6, 8) for the detection of ultrasound that has been emitted from the active zone (3, 5, 7) of the first linear probe (1) and emerges from the workpiece (19);
- displacing the active zones of the two linear probes (1, 2) until ultrasound is detected by the second linear probe (2);
- determining the position (16) of a defect (15) in the workpiece (19) in dependence on the distance of the active zones from one another during the detection and the position of the active zones in relation to the workpiece (19).

8. Method according to Claim 6 or 7,
wherein the acoustic irradiation angle (13) of the oscillator elements (25) is varied.

9. Method according to one of Claims 6 to 8,
wherein the acoustic irradiation angle (13) of the oscillator elements (25) is varied such that ultrasonic fields are focused in the workpiece (19).

## Revendications

1. Dispositif de contrôle d'une pièce ( 19 ) par ultrasons, comprenant au moins une tête ( 1, 2 ) de contrôle linéaire s'étendant en longueur et un appareil ( 9 ) de commande de la tête ( 1, 2 ) de contrôle linéaire, qui a une multiplicité d'éléments ( 25 ) vibrants, qui sont disposés en rang dans la direction ( 11 ) longitudinale de la tête ( 1, 2 ) de contrôle linéaire et qui peuvent être activés individuellement et/ou groupe par groupe, par l'appareil ( 9 ) de commande avec une émission ou pour une détection d'ultrasons, et forment ainsi au moins une zone active de la tête ( 1, 2 ) de contrôle linéaire,
dans lequel, au moyen de la commande des éléments ( 25 ) vibrants individuels par l'appareil ( 9 ) de commande, la au moins une zone active peut être déplacée dans la direction ( 11 ) longitudinale de la tête ( 1, 2 ) de contrôle linéaire,
**caractérisé en ce que**
la tête ( 1, 2 ) de contrôle linéaire a un profil ( 23 ) d'avance en dents de scie, dont les dents ( 24 ) de scie sont prévues comme coins d'avance des éléments ( 25 ) vibrants.

2. Dispositif suivant la revendication 1,
dans lequel les dents ( 24 ) de scie ont des flancs dissymétriques.

3. Dispositif suivant la revendication 2,
dans lequel l'angle de pente des plus plats des flancs définit un angle ( 13 ) d'irradiation acoustique.

4. Dispositif suivant l'une des revendications 1 à 3,
dans lequel les éléments ( 25 ) vibrants produisent un angle ( 13 ) d'irradiation acoustique de 45°.

5. Dispositif suivant l'une des revendications 1 à 4,
dans lequel la tête ( 1, 2 ) de contrôle linéaire a plus de 100 éléments ( 25 ) vibrants, la zone active étant formée de 10 à 20 éléments vibrants.

6. Procédé de contrôle d'une pièce ( 19 ) par ultrasons, comprenant les stades dans lesquels :
- on se procure au moins l'une des têtes ( 1, 2 ) de contrôle linéaire suivant l'une des revendications 1 à 5 ;
- on met l'une derrière l'autre les têtes ( 1, 2 ) de contrôle linéaire à la surface ( 20 ) de la pièce ( 19 ) ;
- on commande la première tête ( 1 ) de contrôle linéaire par l'appareil ( 9 ) de commande pour former la zone ( 3, 5, 7 ) active en vue d'émettre des ultrasons dans la pièce ( 19 ) ;
- on commande la deuxième tête ( 2 ) de contrôle linéaire par l'appareil ( 9 ) de commande pour former la zone ( 4, 6, 8 ) active en vue de détecter des ultrasons, qui ont été émis par la zone ( 3, 5, 7 ) active de la première tête ( 1 ) de contrôle linéaire et qui sortent de la pièce ( 19 ) ;
- on déplace les zones actives des deux têtes ( 1, 2 ) de contrôle linéaire jusqu'à détection d'ultrasons par la deuxième tête ( 2 ) de contrôle linéaire ;
- on détermine la position ( 16 ) d'un endroit ( 15 ) défectueux de la pièce ( 19 ) en fonction de la distance entre les zones actives lors de la détection et de la position des zones actives par rapport à la pièce ( 19 ).

7. Procédé de contrôle d'une pièce ( 19 ) par ultrasons, comprenant les stades dans lesquels :
- on se procure deux têtes ( 1, 2 ) de contrôle linéaire suivant l'une des revendications 1 à 5 ;
- on met les têtes ( 1, 2 ) de contrôle linéaire sur deux surfaces ( 20, 21 ) opposées l'une à l'autre de la pièce ( 19 ), les têtes ( 1, 2 ) de contrôle linéaire étant disposées sensiblement au même niveau ;
- on commande la première tête ( 1 ) de contrôle linéaire par l'appareil ( 9 ) de commande pour former la zone ( 3, 5, 7 ) active en vue d'émettre des ultrasons dans la pièce ( 19 ) ;
- on commande la deuxième tête ( 2 ) de contrôle linéaire par l'appareil ( 9 ) de commande pour former la zone ( 4, 6, 8 ) active en vue de la détection d'ultrasons, qui ont été émis par la zone ( 3, 5, 7 ) active de la première tête ( 1 ) de contrôle linéaire et qui sortent de la pièce ( 19 ) ;
- on déplace les zones actives des deux têtes ( 1, 2 ) de contrôle linéaire jusqu'à détection d'ultrasons par la deuxième tête ( 2 ) de contrôle linéaire ;
- on détermine la position ( 16 ) d'un endroit ( 15 ) défectueux de la pièce ( 19 ) en fonction de la distance entre les zones actives lors de la détection et de la position des zones actives par rapport à la pièce ( 19 ).

8. Procédé suivant la revendication 6 ou 7,
dans lequel on fait varier l'angle ( 13 ) d'irradiation acoustique des éléments ( 25 ) vibrants.

9. Procédé suivant l'une des revendications 6 à 8,
dans lequel on fait varier l'angle ( 13 ) d'irradiation acoustique des éléments ( 25 ) vibrants, de manière à focaliser des champs d'ultrasons dans la pièce ( 19 ).
